# EUROPEAN PATENT SPECIFICATION

(11) **EP 0 907 836 B1**
(45) Date of publication and mention of the grant of the patent: **28.01.2004**
(21) Application number: 97937954.2
(22) Date of filing: 01.07.1997
(51) Int. Cl.: F16B 37/02, F16B 37/08

(54) **Two-part nut for assembly on a threaded rod**
Zweiteilige Mutter zur Montage auf eine Gewindestange
Ecrou en deux parties pour assemblage sur une tige filetée

(30) Priority: 02.07.1996 US 21082 P
(43) Date of publication of application: 14.04.1999
(73) Proprietor: ERICO INTERNATIONAL CORPORATION, Solon Ohio 44139 (US)
(72) Inventor: KIES, Antonius, M., NL-5062 KA Oisterwijk (NL); VAN GIJSEL, Geradus, Emanual, Cornelus, NL-5051 MB Goirle (NL)
(74) Representative: Gille Hrabal Struck Neidlein Prop Roos
(86) International application number: PCT/US1997/011566
(87) International publication number: WO 1998/000645

(56) References cited:
- EP-A- 0 666 444
- US-A- 2 364 880

## Description

This invention relates generally to a two-part nut and more particularly to a nut which can be assembled on a threaded rod at any location therealong, and then tightened, said nut comprizing the features of the preamble of claim 1.

Threaded rod is provided in substantial lengths and is widely used to construct or hang utilities or other items. it Is also used as tie-rods and has many purposes. The rod con be of substantial length such as several meters or more. To thread a conventional-nut on a rod of such length requires many turns and is a dull and time consuming job. In many hanger or fastening situations, the ends of the rod may be blocked with something already installed or fixed, and to put another nut on the rod could require substantial disassembly. It would, of course, be desirable to be able to position the nut on the rod laterally at the desired position and then simply tighten it with a few turns.

Many and varled solutions to these problems have been proposed. A typical solution is that found in US-A-4,826,376. Two C-shaped nut members are joined together for limited axial movement and relative rotation. The two parts are complex and the nut, while effective, Is costly, Others are overly complex or simply do not function as a conventional nut which can be tightened after being slipped on. Others simple do not have the holding power to clamp a load or may slip under load, particularly an offset load.

Examples of the wide variety of devices which have attempted to solve the problem are seen in US-A-3,844,518, US-A-4,473,205, US-A-4,634,327, US-A-5,098,241 and EP-A-0666444.

A fastening device for quick attachment to a threaded rod at any point along the length of the rod comprising the features of the preamble or the introductory portion of claim 1 is disclosed in US-A-4,634,327.

The fastening device of US-A-4,634,327 comprizes a U-shape fastening element having a web and first and second general flat-flanges extended outwardly from the web In spaced-apart parallel relation. This fastening element is bent from a rectangular flat metal plate. When this U-shape fastening element is attached to a threaded rod a retainer element made of resilient material like plastics can be inserted in the spacing between the flanges of the fastening element in order to prevent the fastening element from rotating out of threaded engagement with the threaded rod.

In the universal pipe bracket of EP-A-0666444 a pin provided with an external screw thread can be inserted In a hole of a fixing block and a sliding nut comprising two ribs which are connected to one another by a top plate. The ribs can be pushed into a hole in the fixing block, which hole is delimited by a barrier on one side of the fixing block.

The object of the Invention Is to provide a two-part nut which may be installed easlly and reliable on a threaded rod at any location therealong and which is of simple and low-cost design and can be handled without particular skill.

This object is met according to the present Invention with a nut having the features of Independent claim 1.

Preferred embodiments and Improvements of the invention are subject of the dependent claims.

The invention is a two-part nut which may be installed on a threaded rod laterally and then turned to tighten against another object. One part of the nut is a sheet metal housing which, normal to the axis of the rod, is U-shape and has a non-circular exterior profile. Preferably other than the opening between the legs, the profile is in the form of a square nut. The housing is positioned on the rod so that the legs straddle the rod, and the housing has a relatively short dimension axially of the nut. The housing may be formed from a single piece of sheet metal with a progressive die.

The second part is a U-shape spring metal clip which includes a flat bight portion and parallel spring legs. The legs of the clip fit in two parallel slots in the exterior of one of the legs of the housing. The clip has two positions. One is retracted where the legs of the spring clip do not cross or interfere with the opening between the legs of the housing. The other is a fully seated position where the legs of the clip span the opening between the legs of the housing. In such fully seated position, the bight portion of the clip is flush against the exterior of the one leg of the housing between the parallel slots while the tips of the legs of the spring clip almost abut the unslotted exterior of the other leg of the housing. The spring legs of the clip are provided with inwardly struck linear thread impressions which match the threads of the rod. The respective thread impressions are a half-pitch offset.

The interior of the housing is mostly open except for certain folded flanges. Two flanges, one from each side of the housing at the center of the bight portion of the housing, back up and support the center of one leg of the clip. Flanges on the insides of the legs of the housing overlie and back up the other leg of the clip. The other leg thus has two such back-up supports, one symmetrically on each side of the threaded rod. The tips of both legs of the clip are provided with outwardly struck barbs which snap past such flanges when the clip is seated, locking the clip in place when the rod is present.

With the clip in a retracted but assembled position with respect to the housing, the housing is positioned laterally on a threaded rod with the legs of the housing straddling the rod. The interior of the legs of the housing are provided with guide edges properly positioning the rod in the crotch of the housing. The size of the nut and rod are, of course, related. With the rod properly positioned in the nut housing, the spring clip is then pushed in to a seated position. The tips of the two legs slide perpendicular to the legs of the housing and between the backup flanges and the exterior of the rod. The barbs snap over such flange edges and the flanges act on the thread sections as linear cams forcing such sections against the threads of the rod, but more importantly, preventing such sections from moving outwardly or away from each other under load. When the clip is seated, the nut may then be tightened with a wrench.

The barbs prevent the clip from being simply withdrawn from the seated position when the rod is present. The legs have to be pressed together for the barbs to clear the support flanges. The barbs also engage the parallel slots to hold the clip assembled to the housing in the retracted or unseated condition. With the invention, a low cost in situ nut is provided.

To the accomplishment of the foregoing and related ends, the invention then comprises the features hereinafter fully described and particularly pointed out in the claims, the following description and the annexed drawings setting forth in detail certain illustrative embodiments of the invention, these being indicative, however, of but a few of the various ways in which the principles of the invention may be employed, wherein
Figure 1 is an exploded perspective view of the two parts of the nut of the present invention;
Figure 2 is a plan view of the sheet metal housing;
Figure 3 is an elevation of the housing as seen from the bottom of Figure 2;
Figure 4 is a plan view of the blank from which the sheet metal housing is formed;
Figure 5 is an enlarged perspective of the spring clip;
Figure 6 is fragmentary enlarged section through the threaded rod showing the housing in place and the clip seated and supported by the housing;
Figure 7 is a perspective view showing the parts assembled but the clip unseated and being laterally positioned on a threaded rod;
Figure 8 is a similar perspective view showing the clip being seated; and
Figure 9 is a perspective view showing the nut being tightened by a wrench.

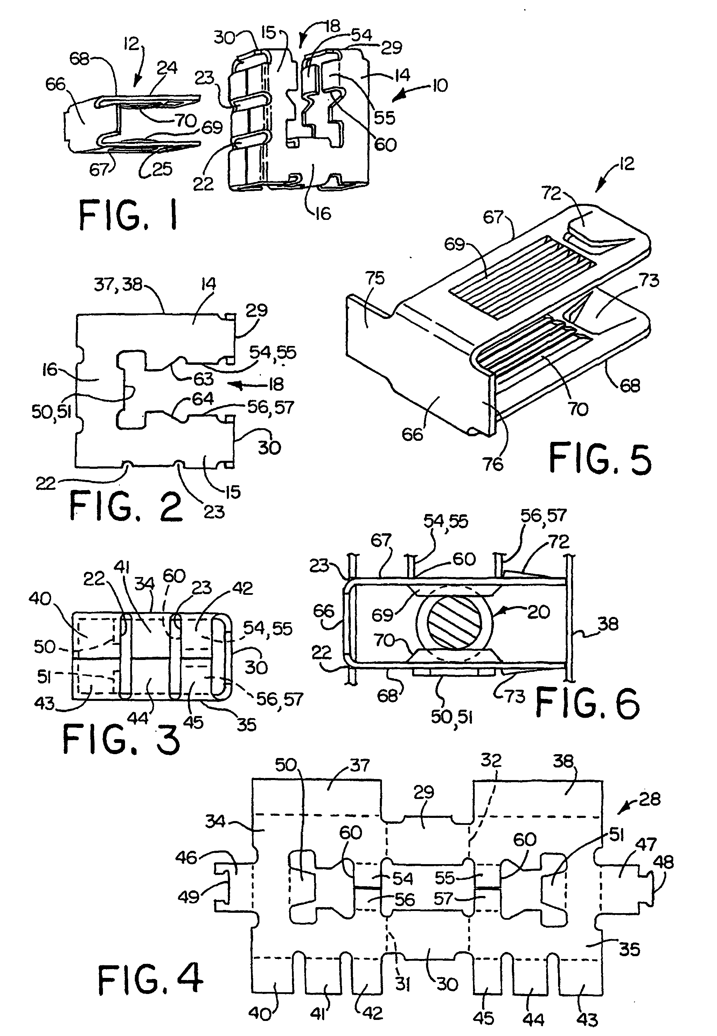

Referring initially to Fig. 1, there is illustrated the two components of the nut in accordance with the present invention. The two components are the sheet metal housing shown generally at 10 and the spring clip shown generally at 12. The housing is formed of a single sheet of sheet metal and includes two legs shown generally at 14 and 15 with an interconnecting bight portion 16. The two legs form a crotch or opening shown generally at 18 and the legs are designed to straddle a threaded rod 20, seen for example in Figs. 6-9.

The leg 15 of the housing is provided with parallel slots seen at 22 and 23 which are adapted to receive the legs 24 and 25 respectively, of the U-shape spring clip 12. In this manner, after the housing is positioned laterally on a nut, the clip 12 may be seated in the housing with the legs 24 and 25 entering the slots and moving to a seated position at right angles to the legs of the housing also straddling the threaded rod and when locked in place, the nut is secured to the threaded rod.

Referring now to Figs. 2, 3, and 4, it will be seen that the housing may be formed of a single sheet or blank of sheet metal which is shown at 28 in Fig. 4. The blank includes two narrow, generally parallel portions, seen at 29 and 30 which form the ends of the legs as seen in Fig. 2. It is noted that the interior corners of the blank are provided with significant radii to facilitate the bending of the blank through the various operations of a progressive die to form the nut housing indicated. The blank is bent along the dotted lines seen at 31 and 32. This forms the parallel top and bottom surfaces 34 and 35 of the nut as seen in Fig. 3. The edges 37 and 38 seen at the top of Fig. 4 are bent toward each other to form the exterior of the leg 14 while the exterior of the opposite leg 15 is formed by bending the three tabs 40, 41, and 42 seen on one side of the blank and also the respective tabs 43, 44, and 45 on the other side of the blank to form the slotted exterior wall of the leg 15. The back of the bight portion of the nut housing is formed simply by folding the projecting end tabs seen at 46 and 47 toward each other. The tab 47 may have a projection 48 which snaps into slot 49 of the tab 46 locking the housing in its formed position. The interior of the bight portion is formed by folding the two flanges 50 and 51 toward each other. These tabs form the back of the slot or crotch 18 and the surface of such tabs facing the slot is substantially aligned with the left hand edge of slot 22 as seen in Figure 3.

On one side of the crotch, the tabs 54 and 55 are bent toward the tabs 56 and 57 on the other side of the crotch. The edges of such tabs seen at 60 are aligned with the right hand edge of the slot 23, as seen in Figure 3. When the tabs 54 and 55 as well as the tabs 56 and 57 are folded toward each other, this leaves ramped guide surfaces seen at 63 and 64 on each side of the interior of the slot of the housing. Such slightly projecting guide surfaces function to seat and center the housing with respect to a threaded rod when the housing is inserted laterally on the threaded rod with the legs straddling the threaded rod.

Referring now more particularly to Figs. 1, 5, and 6, it will be seen that the spring clip 12 is also U-shape and includes a bight portion 66 and two parallel spring legs 67 and 68. Each spring leg is provided with an inwardly deformed thread section seen at 69 and 70, respectively. The thread forms are linear but the thread form 69 is offset from the thread form 70, one-half of the pitch of the threaded rod. Beyond the thread forms the two fingers are provided with outwardly struck spring tabs or latches 72 and 73, respectively. As seen more clearly in Fig. 6, the latches are designed to snap behind the inwardly extending flanges on the housing locking the clip in its seated position seen in Fig. 6 so that it cannot be removed unless the tips of the legs are forced together. With the threaded rod 20 in place, this would be exceedingly difficult. It is also noted that the bight portion of the clip optionally may be provided with a relatively long projection 75 on one side and a relatively short projection 76 on the opposite side. This provides a larger surface area at the back of the clip to enable it to be pushed by finger pressure into the housing to its seated position. It also facilitates the removal of the clip if unlatched.

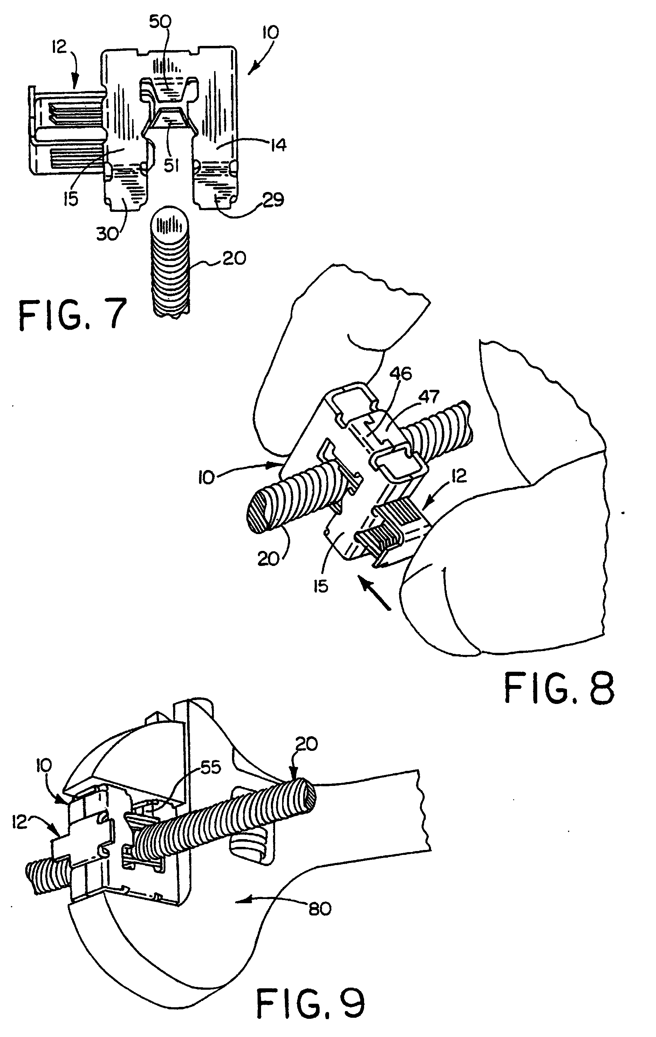

Referring now to Figs. 6-9, it will be seen that the nut parts in Fig. 7 are in their assembled position, but the clip has not been pushed to its seated position. In such position as seen in Fig. 7, the latches 72 and 73 will engage the inside edges of the slots in the housing holding the clip assembled to the housing even though not seated. The housing is then placed on the threaded rod so that the legs 14 and 15 straddle the rod. The guide ramps 63 and 64 assist in locating the threaded rod and housing properly. When the threaded rod is properly seated in the crotch of the notch 18, the spring clip 12 is then simply pushed in as seen in Figure 8 to the seated position seen in Fig. 6. As the clip moves to the seated position, the long inclined ramps of the struck barbs 72 and 73 cam the clip legs inside the edges 60 and of course inside the folded tabs 50 and 51 to ensure proper engagement of the thread sections 69 and 70 with the threaded rod 20. As the clip legs move to the seated position, the ramps of the latching barbs ensure that the tips move past the various tabs while being inserted and the snap edges lock the clip in place when fully seated. When fully seated, the respective thread sections are directly backed up and held by certain edges or tabs of the housing. As seen in Fig. 6, the tabs 50 and 51 are directly behind the leg 68 backing up the center of the leg at the thread section holding the thread section 70 in mesh with the threads of the rod. The opposite leg 67 is backed up and supported by the edges 60 of the tab sets 54 and 55 on one side of the rod, and 56 and 57 on the other side. Such edge sets are symmetrically located with respect to the axis of the rod. Accordingly, a three point support or backup is provided for the two spring legs of the clip. The thread section 69 is backed up and held as a short beam against the threads of the rod 20. Both legs are snap-locked in place by the tabs 72 and 73.

After the clip is seated in the housing, the thread sections are in engagement with the threads of the rod and the nut may be tightened simply by turning with the crescent wrench illustrated at 80 in Fig. 9 grasping the square external configuration of the nut and tightening it against whatever object with partial or few turns. Even though the profile of the nut housing as seen in Fig. 2 is U-shape, the overall profile, save for the notch or opening between the legs 18, is in the form of a square and noncircular. This enables the nut to be turned readily by either adjustable or fixed wrenches, pliers, or by hand for that matter.

It will be appreciated that different size nuts and nut assemblies may be used with different size rods. Although the square configuration of the housing is preferred for simplicity, other forms of noncircular in-profile housing may be employed. The overall height of the nut axially of the rod is minimal so that the nut can be installed on a rod in a very narrow exposed axially length of the rod.

It can now be seen that there is provided a nut which comprises a U-shape sheet metal housing, having a bight portion and a pair of legs adapted to straddle a threaded rod. Spaced slots in one leg accommodate the legs of a spring clip also having a bight portion. The legs of the clip are adapted to be inserted in the spaced slots to clasp the threaded rods with thread impressions on each leg of the spring clip embracing the threads of the rod. The housing includes portions engaging and backing up the legs of the spring clip to maintain the thread impressions in mesh with the threads of the rod when the legs of the spring clip are seated in the slots.

## Claims

1. Nut, which can be assembled on a threaded rod (20) at any location therealong and can then be tightened, comprising a U-shape housing (10) having a bight portion (16) and a pair of legs (14, 15) adapted to straddle the threaded rod (20), and a U-shape clip (12), having legs (24, 25) adapted to clasp the threaded rod (20), **characterized in that** the housing (10) comprises of sheet 2 metal and that the clip (12) is a spring clip having a bight portion (66) and a pair of legs (24, 25) adapted to be inserted in the housing (10), wherein thread impressions (69, 70) on each leg of said spring clip being adapted to embrace the threads of the rod (20), and wherein means (56, 57) on said housing (10) engage the legs (24, 25) of the spring clip (12) to maintain the thread impressions (69, 70) in mesh with the threads of the threaded rod (20) when the legs (24, 25) of the spring clip (12) are seated in the housing (10).

2. Nut as set forth in claim 1, including latch means (72, 73) to lock said spring clip (12) to said housing (10) to prevent disassembly in the seated position of the clip (12).

3. Nut as set forth in claim 2, wherein said latch means (72, 73) comprises struck tabs on the legs (24, 25) of the spring clip (12).

4. Nut as set forth in claim 3, wherein said tabs (72, 73) include ramps camming the tips of the legs (24, 25) past said means (56, 57) on said housing (10).

5. Nut as set forth in claim 3, wherein said tabs (72, 73) include ramps driving said legs (67, 68) of the clip (12) toward each other and the thread impressions (69, 70) against the threads of the rod (20).

6. Nut as set forth in claim 5, wherein said means (56, 57) on said housing (10) comprises rigid back-ups for the legs (67, 68) of said spring clip (12) holding the thread impressions in engagement with the threads of the rod (20).

7. Nut as set forth in claim 6, including a rigid back-up (54, 55) centered behind one thread impression (69, 70).

8. Nut as set forth in claim 7, including two rigid back-ups (54 to 57) behind and at the ends of the other thread impression (69, 70).

9. Nut as set forth in claim 8, wherein said back-ups (54 to 57) are formed by tabs formed on said sheet metal housing (10).

10. Nut as set forth in one of claims 1 to 9, wherein a pair of slots (22, 23) is provided in one leg of housing (10), said legs (24, 25) of said spring clip (12) being parallel and adapted to be inserted in said slots, inwardly projecting thread forms (69, 70) on each leg (24, 25) of said spring clip (12) adapted to straddle the rod (20) when inserted and seated in the slots (22, 23).

11. Nut as set forth in claim 10, wherein said means (54 to 57) on said housing (10) are symmetrically arranged with respect to the axis of the threaded rod (20).

12. Nut as set forth in anyone of claims 1 to 11, wherein said U-shape housing (10), but for the notch between the legs, is rectangular In profile.

## Patentansprüche

1. Zweiteilige Schraubenmutter, die auf eine Gewindestange (20) an einer beliebigen Stelle über deren Länge angeordnet und darauf festgeschraubt werden kann, und die ein U-förmiges Gehäuse (10) mit einem eingebuchteten Abschnitt (16) und ein Paar Schenkel (14, 15) aufweist, welche die Gewindestange (20) überspannen können, und eine U-förmige Klammer (12) mit Schenkeln (24, 25) enthält, welche die Gewindestange (20) umklammern,
**dadurch gekennzeichnet, dass**
das Gehäuse (10) aus einem Metallblech besteht und dass die Klammer (12) eine Federklammer mit einem eingebuchteten Abschnitt (66) ist und zwei Schenkel (24, 25) aufweist, die in das Gehäuse (10) eingeschoben werden können, wobei Gewindeeinschnitte (69, 70) in den Schenkeln der Federklammer so angeordnet sind, dass sie die Gewinde der Stange (20) umklammern können, und dass Mittel (56, 57) auf dem Gehäuse (10) angeordnet sind, welche die Schenkel (24, 25) der Federklammer (12) ergreifen, um die Gewindeeinschnitte (69, 70) mit den Gewinden der Gewindestange (20) in Eingriff zu halten, wenn die Schenkel (24, 25) der Federklammer (12) in das Gehäuse (10) eingeschoben sind.

2. Zweiteilige Schraubenmutter nach Anspruch 1,
**dadurch gekennzeichnet, dass**
sie Verriegelungsmittel (72, 73) enthält, um die Federklammer (12) an dem Gehäuse (10) zu halten, um dadurch die Ablösung dieser Federklammer (12) in der eingesetzten Position zu verhindern.

3. Zweiteilige Schraubenmutter nach Anspruch 2,
**dadurch gekennzeichnet, dass**
die Verriegelungsmittel (72, 73) gestanzte Zungen auf den Schenkeln (24, 25) der Federklammer (12) enthalten.

4. Zweiteilige Schraubenmutter nach Anspruch 3,
**dadurch gekennzeichnet, dass**
die Verriegelungsmittel (72, 73) Rampen enthalten, welche die Enden der Schenkel (24, 25) über den Mitteln (56, 57) auf dem Gehäuse (10) in Eingriff bringen.

5. Zweiteilige Schraubenmutter nach Anspruch 3,
**dadurch gekennzeichnet, dass**
die Verriegelungsmittel (72, 73) Rampen enthalten, welche die Schenkel (67, 68) der Federklammer (12) zusammenziehen und die Gewindeeinschnitte (69, 70) gegen die Gewinde der Gewindestange (20) drücken.

6. Zweiteilige Schraubenmutter nach Anspruch 5,
**dadurch gekennzeichnet, dass**
die Mittel (56, 57) auf dem Gehäuse (10) steife Widerlager für die Schenkel (67, 68) der Federklammer (12) enthalten, welche die Gewindeeinschnitte mit den Gewinden der Gewindestange (20) in Eingriff halten.

7. Zweiteilige Schraubenmutter nach Anspruch 6,
**dadurch gekennzeichnet, dass**
sie ein steifes Widerlager (54, 55) enthält, das hinter einem der Gewindeeinschnitte (69, 70) zentriert ist.

8. Zweiteilige Schraubenmutter nach Anspruch 7,
**dadurch gekennzeichnet, dass**
sie zwei steife Widerlager (54, 57) enthält, die hinter und an den Enden der anderen Gewindeeinschnitte (69, 70) angeordnet sind.

9. Zweiteilige Schraubenmutter nach Anspruch 8,
**dadurch gekennzeichnet, dass**
die Widerlager (54 bis 57) aus gestanzten Zungen bestehen, die auf dem aus einem Metallblech bestehenden Gehäuse (10) angeordnet sind.

10. Zweiteilige Schraubenmutter nach einem der Ansprüche 1 bis 9,
**dadurch gekennzeichnet, dass**
sie zwei Schlitze (22, 23) in einem der Schenkel des Gehäuses enthält, wobei die beiden Schenkel (24, 25) der Federklammer (12) parallel zu einander liegen und so ausgelegt sind, dass sie in diese Schlitze eingesetzt werden können, und sie nach innen reichende Gewindeformen auf jedem der Schenkel (24, 25) der Federklammer (12) aufweist, welche die Gewindestange (20) überspannen, wenn sie in die Schlitze (22, 23) eingesetzt wird.

11. Zweiteilige Schraubenmutter nach Anspruch 10,
**dadurch gekennzeichnet, dass**
die Mittel (54 bis 57) auf dem Gehäuse (10) symmetrisch gegenüber der Achse der Gewindestange (20) angeordnet sind.

12. Zweiteilige Schraubenmutter nach einem der Ansprüche 1 bis 11,
**dadurch gekennzeichnet, dass**
das U-förmige Gehäuse (10) mit Ausnahme der Kerbe zwischen den Schenkeln ein rechteckiges Profil hat.

## Revendications

1. Ecrou en-deux parties pouvant être monté sur une tige filetée (20) à une position quelconque sur la longueur de cette dernière et pouvant ensuite être serré dans cette position, et comprenant un boîtier (10) sous forme d'un U incluant une partie creuse (16) ainsi qu'une une paire de jambes (14, 15) adaptées à contourner ladite tige filetée (20), et comprenant en outre un clip élastique (12) pourvu de deux jambes (24, 25) adaptées à serrer ladite tige filetée,
**caractérisé en ce que**
ce boîtier (10) consiste d'une feuille de métal et **en ce que** ledit clip (12) est un clip élastique comprenant une partie creuse (66) et une paire de jambes (24, 25) adaptées à être insérées dans ledit boîtier (10), et dans lequel les parties creuses (69, 70) prévues sur les jambes du clip élastique sont adaptées à embrasser les filetages sur ladite tige filetée (20), et **en ce que** des moyens (56, 57) prévus sur ledit boitier (10) entrent en contact avec les jambes (24, 25) du clip élastique (12) afin de maintenir les parties creuses filetées (69, 70) en contact avec les filetages de la tige filetée (20) lorsque les jambes (24, 25) du clip élastique (12) sont placées dans ledit boîtier (10).

2. Ecrou en deux parties suivant la revendication 1,
**caractérisé en ce que**
il comprend des moyens de serrage (72, 73) pour serrer ledit clip élastique (12) sur ledit boîtier (10) afin d'éviter le déssamblage du clip èlastique (12) dans la position fixée.

3. Ecrou en deux parties suivant la revendication 2,
**caractérisé en ce que**
les moyens de serrage (72, 73) comprennent des oreilles situées sur les jambes (24, 25) du clip élastique (12).

4. Ecrou en deux parties suivant la revendication 3,
**caractériséen ce que**
lesdits moyens de serrage (72, 73) comprennent des rampes mettant en contact les extrémités des jambes (24, 25) à l'aide desdits moyens (56, 57) prévus sur ledit boîtier (10).

5. Ecrou en deux parties suivant la revendication 3,
**caractérisé en ce que**
les moyens de serrage (72, 73) comprennent des rampes comprimant les jambes (67, 68) du clip élastique (12) et poussant les découpes filetées (69, 70) contre les filetages de la tige filetée (20).

6. Ecrou en deux parties suivant la revendication 5,
**caractérisé en ce que**
les moyens (56, 57) prévus sur ledit boîtier (10) comprennent des moyens de support pour les jambes (67, 68) du clip élastique (12) afin de maintenir ces découpes filetées en contact avec les filetages de la tige filetée (20).

7. Ecrou en deux parties suivant la revendication 6,
**caractérisé en ce que**
il comprend un support rigide (54, 55) centré derrière l'une des découpes filetées (69, 70).

8. Ecrou en deux parties suivant la revendication 7,
**caractérisé en ce que**
il comprend deux supports rigides (54, 57) prévus à l'arrière et aux extrémités de l'autre découpe filetée (69, 70).

9. Ecrou en deux parties suivant la revendication 8,
**caractérisé en ce que**
lesdits supports (54 à 57) sont formés par des oreilles prévues sur ledit boîtier métallique (10).

10. Ecrou en deux parties suivant l'une des revendications 1 à 9,
**caractérisé en ce que**
deux fentes (22, 23) sont prévues sur l'une des jambes du boîtier (10), lesdites jambes (24, 25) du clip élastique (12) étant prévues en parallèle et sont adaptées à être insérées dans lesdites fentes, et **en ce que** des formes de filetages (69, 70) tournées vers l'intérieur et prévues sur chacune des jambes (24, 25) du clip élastique (12) sont adaptées à couvrir la tige filetée (20) lorsqu'elles sont insérées et fixées dans les fentes (22, 23).

11. Ecrou en deux parties suivant la revendication 10,
**caractérisé en ce que**
les moyens (54, 57) prévus sur ledit boîtier (10) sont prévus de façon symmétrique par rapport à l'axe de la tige filetée (20).

12. Ecrou en deux parties suivant l'une des revendications 1 à 11,
**caractérisé en ce que**
à l'exception de l'encoche située entre les jambes le boîtier (10) sous forme d'un U est pourvu d'un profil rectangulaire.
